(19)

Europäisches
Patentamt

European
Patent Office

Office européen
des brevets

(11) **EP 2 363 251 A1**

(12) **EUROPEAN PATENT APPLICATION**

(43) Date of publication:
**07.09.2011 Bulletin 2011/36**

(51) Int Cl.:
***B25J 9/16*** *(2006.01)*

(21) Application number: **10155045.7**

(22) Date of filing: **01.03.2010**

(84) Designated Contracting States:
**AT BE BG CH CY CZ DE DK EE ES FI FR GB GR
HR HU IE IS IT LI LT LU LV MC MK MT NL NO PL
PT RO SE SI SK SM TR**
Designated Extension States:
**AL BA ME RS**

(71) Applicant: **Honda Research Institute Europe
GmbH
63073 Offenbach/Main (DE)**

(72) Inventors:
• **Janssen, Herbert
63303 Dreieich (DE)**

• **Moringen, Jan
33594 Bielefeld (DE)**
• **Wachsmuth, Sven
33594 Bielefeld (DE)**

(74) Representative: **Rupp, Christian
Mitscherlich & Partner
Patent- und Rechtsanwälte
Sonnenstraße 33
80331 München (DE)**

(54) **Robot with Behavioral Sequences on the basis of learned Petri Net Representations**

(57)    This invention relates to a computer system, a robot system, and a driver assistance system that is required to interact with its environment in order to recognize and anticipate tasks or to provide support or assistance or initiate actions. The invention also relates to a software program product for such a system. In general the invention can be used for purposes such as (intention) recognition, prediction or action generation (imitation/cooperation) which is applied in the above mentioned areas as well as computer games or agents therefore.

Fig. 1

**Description**

This invention relates to a computer system, a robot system, and a driver assistance system, each of which interacts with its environment in order to anticipate tasks or to provide support or assistance. The invention also relates to a software program product for such a system.

In general the invention can be used for purposes such as (intention) recognition, prediction or action generation (imitation/cooperation) applied in the above mentioned areas as well as artificial agents also for computer games.

The invention is also applicable to situations in which processes are observed, using sensors, in the form of time-series formed by trajectories of multiple distinguishable objects in the input filed of the sensors. For complex observed processes, multiple observations of the same process class are preferred.

Typically, in order to make sensory observations, an input signal or input pattern is accepted from an input means, e.g. from one or more sensors, the signal providing information on the environment. An output signal or output pattern is obtained by computations, which may serve as input to other systems for further processing, or actors of a system in order to interact with the environment. The input signal may be supplied by one or more sensors, e.g. for visual or acoustic sensing, but also by a software or hardware interface. The output pattern may as well be output through a software and/or hardware interface or may be transferred to another processing unit or actor, which may be used to influence the actions or behavior of a robot or vehicle.

Computations and transformations required by the invention and an application of neural networks as set forth below as well as those necessary for maintaining, adjusting and training an learning, may be performed by a processing means such as one or more processors (CPUs), signal processing units or other calculation, processing or computational hardware and/or software, which might also be adapted for parallel processing. Processing and computations may be performed on standard off the shelf (OTS) hardware or specially designed hardware components. A CPU of a processor may perform the calculations and may include a main memory (RAM, ROM), a control unit, and an arithmetic logic unit (ALU). It may also address a specialized graphic processor, which may provide dedicated memory and processing capabilities for handling the computations needed.

Also data storage is usually provided. The data storage is used for storing information and/or data obtained, needed for processing and results as well as data required by the neural network. The stored parameters may be adapted to facilitate leaning. The storage also allows storing or memorizing observations related to events and knowledge deduced therefrom to influence actions and reactions for future events.

The storage may be provided by devices such as a hard disk (SSD, HDD), RAM and/or ROM, which may be supplemented by other (portable) storage media such as floppy disks, CD-ROMs, Tapes, USB drives, Smartcards, etc. Hence, a program encoding a method according to the invention as well as data acquired, processed, learned or needed in/for the application of the inventive system and/or method may be stored in a respective storage medium.

In particular, the invention may be implemented as a software program product on a (e.g. portable) physical storage medium which may be used to transfer the program product to a processing system or a computing device in order to instruct the system or device to perform a method according to this invention. Furthermore, the method may be directly implemented on a computing device or may be provided in combination with the computing device. The computing device may also be a robot or a system for supporting a human such as a driver assistance system.

**Background of the Invention**

When interacting with their environment and other humans, humans are aware of and able to understand processes going on around them. This is because humans are able to build and have a dynamic mental model of their environment and appropriate actions that can be extended into the future. Furthermore, humans can form mental models of processes by observing a few instances (teaching examples) of these processes. As an example, a human who has a mental model of the process of preparing tea is able to recognize when another human prepares tea, can anticipate the next actions of the other human, is able to assist in preparing tea or make tea on his or her own.

Consequently, the usefulness of artificial agents such as robots or software agents implemented on a computer system, in a robot or in a car or other land, sea or air vehicle (e.g., to provide driver assistance) in situations that involve interaction with humans is improved if the artificial agents exhibits - at least to a certain degree - some or all of the aforementioned abilities, e.g. being able to obtain a model of the environment (i.e. the input field of its sensors) and to deduce suitable behavior for related situations, even if a identical situation was not encountered before.

In general, when interacting with humans or other artificial agents (e.g. humanoid robots), an artificial agent needs representations of the temporal and causal structure of processes relevant to the respective domain (model) in order to recognize, anticipate, assist in or generate such processes. In addition, representations of new processes have to be formed based on previous observations since not all relevant processes can be known in advance.

In a robotics scenario, the availability of process representations as described above enables a robot to behave in a useful way by performing, at least to a certain degree, some or all of the following actions:

- to classify observations as instances of previously seen processes and to update the internal model of the situation accordingly,
- to predict subsequent events based on a previously recognized (process) model and to adapt its own behavior based on the predictions,
- to generate actions with correct timing and ordering constraints,
- to choose from multiple alternative actions to be generated based on previous observations and the (process) model, and
- to synchronize/align generated actions with observations according to the temporal and causal relations captured in the process model.

The invention hence can be applied in an artificial system to enable it to observe, using sensors connected to a computing unit, a task performed by a human (or another robot) and to recognize, predict and reproduce the observed process.

To continue the above example, a robot having a manipulator arm and a camera head observes a human picking and placing objects or performing the steps to prepare tea. Using the method according to the present invention, representations of observations, either produced by explicit teaching or by passive observation, can be constructed by processing the supplied camera signals by a computing unit of the robot. The robot is then able to recognize the observation as "preparing tea", predict the next step and perform the whole process or parts thereof itself. This application preferably uses lower-level knowledge such as object identities and object positions, proprioceptive information and other information characterizing current situations to be made available by means which are not the main focus of the present invention, but which are known to persons skilled in the art.

Further, a car or other land, air or sea vehicle equipped with a system according to the invention can form a process model of the driver's behavior - possibly in relation to other information such as traffic conditions or other drivers and be able to recognize, predict or generate the observed process. Examples would be to recognize and predict an overtaking process and give the driver some assistance (issuing visual or acoustical signals or displays, controlling actuators of the car) or even to recognize and predict that the driver is going home and to generate the further process by the system itself.

Also, an artificial agent (implemented in software or in hardware such as a robot) according to the invention recognizes and learns the process of a human interacting with the artificial agent including the conditions for actions and be able to recognize, predict or reproduce them. An example would be a computer recognizing that the user is currently performing a certain complex task and to assist or auto-complete the process. Another example would be a software agent such as a software controlled player in a computer game observing the behavior of a human player and recognizing, predicting and generating the process either as a team-mate or an adversary.

Glossary

The following names and definitions are used:

Anytime Algorithm

An any time algorithm is a algorithm providing useful results (even) when interrupted before its (regular) termination.

Artificial Neural Network (ANN)

ANN, also called "neural network", is a computational model that simulates the structure and/or functional aspects of a biological neural network. It comprises an interconnected group of artificial neurons and processes information using an approach that models mental or behavioral phenomena as an emergent process of interconnected networks of simple units for computation (neurons, synapses). In most cases an ANN is an adaptive system that changes its structure based on external or internal information that flows through the network during the learning phase. Neural networks are non-linear statistical data modeling tools. They can be used to model complex relationships between inputs and outputs or to find patterns in data.

Petri Net

Petri Nets are a modeling language for the description of discrete distributed systems. In the context of this invention Petri Nets are used as a description of process (see below). Formally, a Petri Net is a bipartite graph structure with an associated execution semantic based on consumption/production of tokens along edges. The vertices of Petri Nets are comprised of places and transitions. Edges are directed and connect one place and one transition each (transitions are discrete events that may occur, signified by bars, places represent conditions (usually signified by circles), and directed arcs describe which places are pre- and/or post-conditions for which transitions).

In [Bause and Kritzinger, 2002] an introduction to Timed Transition Petri Net (TTPN) and Generalized Stochastic Petri Nets (GSPN) is provided. Petri nets offer a graphical notation for stepwise processes that include choice, iteration, and concurrent execution. In TTPNs once a transition is enabled, it will fire only after a certain time has elapsed.

See also http://en.wikipedia.org/wiki/Petri_net.

Coverability Graph

Given the graph of all possible marking states and associated transitions of a Petri Net the Coverability Graph is derived by collapsing sets of equivalent nodes into single nodes according the equivalence relation given e.g. in Algorithm 5.1 of [Bause and Kritzinger, 2002].

Hidden Markov Model (HMM)

A hidden Markov model (HMM) is a statistical model in which the system being modeled is assumed to be a Markov process with unobserved state. In a regular Markov model, the state is directly visible to the observer, and therefore the state transition probabilities are the only parameters. In a hidden Markov model, the state is not directly visible, but output dependent on the state is visible. Each state has a probability distribution over the possible output tokens.

The Abstract HMM (AHMM) and Hierarchical HMM (HHMM) are variants in which states can have sets of child states.

See also http://de.wikipedia.org/wiki/Hidden_Markov_Model.

Jaccard Distance

This is a statistic used for comparing the similarity and/or diversity of (sample) sets.

Observation

Data produced by a relevant process and made available to the learning system through sensors (cameras, microphones,...) or by other means.

POMDP

A Markov Process model which includes actions and a reward function. A Partially Observable Markov Decision Process (POMDP) is a generalization of a Markov Decision Process (MDP). A POMDP models an agent decision process in which it is assumed that the system dynamics are determined by an MDP, but the agent cannot directly observe the underlying state. Instead, it can maintain a probability distribution over the set of possible states, based on a set of observations and observation probabilities, and the underlying MDP.

Process

A process is comprised of possibilities of things that can happen to objects that are connected by temporal and causal relations. Individual realizations of processes are time-series (see: Time-Series). Conversely, a collection of time-series can characterize a process. An example: The process of preparing tea requires a cup, hot water, a tea bag and possibly sugar (causal relations: requirements) and consists of pouring the hot water into the cup, putting the teabag into the cup and removing the teabag from the cup (things that happen to objects: tea preparation steps; temporal relations: order of steps). At any time after the water has been poured, sugar can be added. The sub-process of adding sugar can be repeated indefinitely (causal relations: precondition; temporal relations: variations, repetition).

Markov Chain Monte Carlo (MCMC)

Markov chain Monte Carlo (MCMC) methods, are a class of algorithms for sampling from probability distributions based on constructing a Markov chain that has the desired distribution as its equilibrium distribution. The state of the chain after a large number of steps is then used as a sample from the desired distribution. The quality of the sample improves as a function of the number of steps.

Reversible Jump Markov Chain Monte Carlo (rjMCMC) method

The Reversible jump Markov chain Monte Carlo method is an extension to the standard Markov chain Monte Carlo (MCMC) methodology that allows simulation of the posterior distribution on spaces of varying dimensions. Thus, the simulation is possible even if the number of parameters in the model is not known.

Stochastic Optimization

Optimization methods which explore a solution space in a non-deterministic manner. Stochastic optimization methods can generally escape local minima of the solution space but are not guaranteed to find an optimal solution. In this sense they can be considered global stochastic search processes.

Time-series

A time-series is a temporally ordered collection of discrete or continuous observations. Examples include values obtained from sensors in regular intervals such as object positions obtained from a tracking system, development of stock-prices or movie subtitles (non-equidistant, discrete).

Dynamical System

A dynamical system is a formalization of a fixed "rule" which describes the time dependence of a point's position in its ambient space. At any given time a dynamical system has a state which can be represented by a point in an appropriate state space. The evolution rule of the dynamical system is a fixed rule that describes what future states follow from the current state. The rule is deterministic: for a given time interval only one future state follows from the current state. Some authors refer to dynamical system-based methods as attractor-based methods.

Potential Field

A (scalar) potential field is a function which maps points in a space to real numbers. From this mapping a state evolution rule of a dynamical system can be obtained by evolving states along the integral curves of the associated gradient vector field of the potential field. Potential filed based dynamical systems are thus a special case of dynamical systems in general. When a family of functions is fixed, a small number of parameters such as the location of the maximum completely specify a potential field.

Particle Filter

Particle filters, also known as sequential Monte Carlo methods, are model estimation techniques based on simulation. Multiple estimation hypothesis, called particles, are repeatedly evolved in a prediction step and then assessed in an observation step. An optional re-sampling step reduces the population to those particles which provide good explanations of the observation. In contrast to Markov chain Monte Carlo batch methods, particle filters produce updated results after each new observation and can therefore be considered an on-line method.

**State of the art**

The representation of process or action structures and application of such a representation is useful in many application areas. Consequently, many models and approaches have been proposed.
For the sake of easier exposition, the topic of learning representations of process structures is decomposed into the subtopics "representation" and "learning" as they are partially independent. The following paragraphs Representation and Learning present related work regarding representation and learning respectively.

Representation

Representations commonly used in state-of-the-art methods can be divided into several categories:
Rule-based Representations (see, e.g. [Intille and Bobick, 1999]) use a symbolic, declarative, rule-base representation of temporal and causal structure to recognize classes of processes. The rule-based representation lends itself well to probabilistic reasoning. The main disadvantage is the need for expert-written specifications.
Representations based on Stochastic Process Models (examples of this category are Graphical Models, see [Verma and Rao, 2006], in general, and more specifically Dynamic Bayesian Networks, see [Schrempf and Hanebeck, 2005], Abstract Hidden Markov Models, see [Bui et al., 2001] and [Bui et al., 2002], and Hierarchical Hidden Markov Models, see [Xie et al., 2003], and Partially Observable Markov Decision Processes, see [Hoey et al., 2005]). These representations can capture short-term temporal and causal structures, but lack the ability to compactly represent more complex structures, especially independent or coupled concurrent sub-processes. In [Hoey et al., 2005], some parts of the representation are predefined.

Artificial Neural Networks approaches (see, e.g., [Yamashita and Tani, 2008]) model processes using ANNs on multiple time scales. The representation can be built from demonstrations using standard learning methods for recurrent neural networks. Subsequently the ANN is executed by iterating the network dynamics. The use of neural networks allows smooth generalization in the spatial and temporal domain. It is unlikely however, that qualitative variations and independent concurrent sub-processes are representable. Another drawback in some contexts is the lack of interpretability of the learned model.

Attractor-Dynamics based Models: [Grupen and Huber, 2005] propose a hierarchical model in which attractor-based (i.e. dynamical systems-based) controllers are activated by a Semi-Markov Decision Process (SMDP). Fundamentally this method shares the lack of compactness of Markov models in general. Thus temporal structure can only be captured in the hierarchical structure which in turn can only emerge if the learning is specifically constrained on each level. Q-Learning is used on each level of the model to obtain policies which solve the SMDP for the respective level.

Learning

Learning methods used in state-of-the-art methods can be divided into approaches that do parameter estimation and approaches that do model selection or structure learning. Most related methods mentioned here do both.

Bayesian Time-series segmentation: [Green, 1995] and [Punskaya et al., 2002] use rjMCMC, [Xuan and Murphy, 2007], [Fearnhead, 2006] use an efficient forward-backward-style algorithm for segmentation and learning of local model parameters. These methods produce segmentations of a single time-series into homogeneous segments. Although this is useful for the analysis of individual time-series, the underlying process cannot be revealed if its structure is complex.

Q-Learning: [Grupen and Huber, 2005] use Q-Learning to build a SMDP the actions of which govern a hierarchy of controllers. In Q-Learning actions can only depend on information which is available from the current state of the Markov Process in question. Thus patterns of greater temporal extent cannot be discovered and exploited in the learning process unless all information is encoded in the process states.

To summarize, known methods all use linear state sequences or state hierarchies which select local models to represent processes. Associated learning methods sometimes allow the learning of the respective model structure.

While this is suitable for some cases, many processes contain synchronous parallel actions (e.g. hold the sieve over the cup while pouring the water into it), repetitions (e.g. fill all tea-cups) and alternatives (e.g. get the tea-can either from the cabinet or the kitchen-table). The invention addresses this problem by introducing a novel process model and an associated learning method.

It is hence an object of the invention to provide a method for automatic learning and subsequent recognition, prediction and full or partial generation of processes without the above mentioned disadvantages. In particular, a method for creating a process model and an associated learning method is presented.

**Summary of the invention**

This object is achieved by a method and a system according to the independent claims. Advantageous embodiments are defined in the dependent claims.

In a first aspect, the invention provides a method for controlling an artificial agent, comprising the steps of:

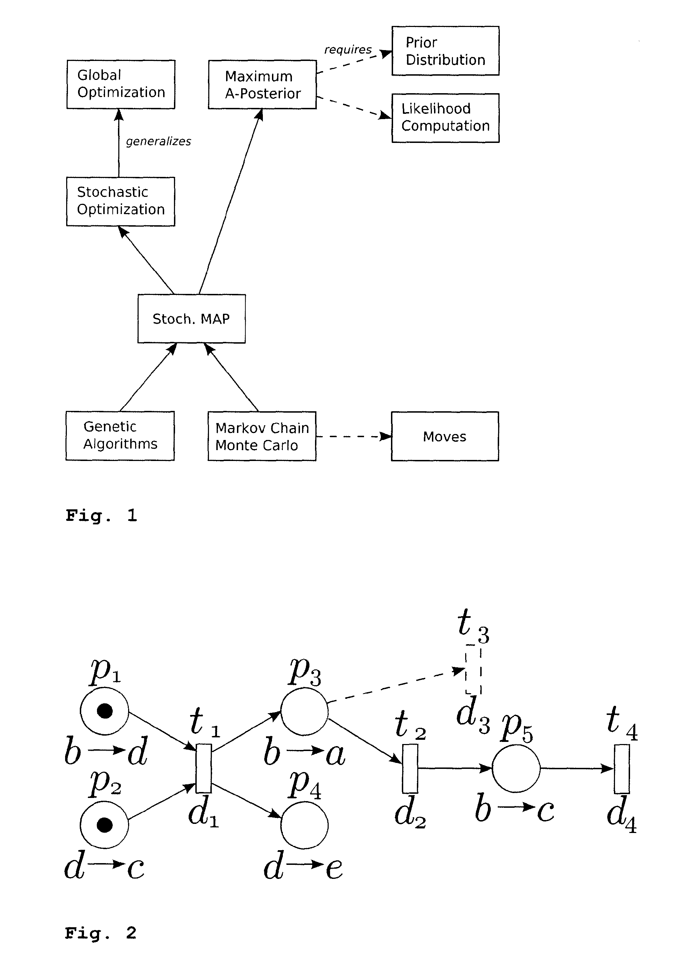

- obtaining multiple sensory observations, each of which is a time-series, observed from the environment by sensorial input means,
- computing a segmentation for each observed time-series, by selecting a set of local models for each segment,
- computing a Timed Transition Petri Net (TTPN) model (see Fig. 2) in order to generate an approximation of all segmentations simultaneously by using an algorithm selected from the class of stochastic optimization methods (see Nomenclature section and Fig. 1), and
- controlling at least one artificial actuator using the TTPN model.

The TTPN model can be interpreted as a model for a process underlying the observed multiple time-series observations.

In a second aspect the agent can use this TTPN model for recognition purposes.

For recognition, multiple previously learned TTPN models are instantiated and a particle filter is used to continuously determine the model which provides the best explanation of an observed time-series.

In a third aspect the agent may use this TTPN model for action generation purposes.

For action generation a previously learned TTPN model is instantiated and the execution semantics are applied to generate a series of actions for execution by an agent. Because of the non-deterministic nature of the execution, the generated actions vary in a probabilistic manner but are all realizations of the underlying process.

The stochastic optimization method used to derive the TTPN from the segmentations and selected local models may be realized using the Reversible Jump Markov Chain Monte Carlo method.

Alternatively an evolutionary algorithm may be used for this step.

Segmentation may describe a time-series as a linear sequence of segments.

A segment may be described by a time interval and one or more local models.

A local model may be a dynamical system-based model.

The number of segments, the number of local models describing individual segments and/or the parameters of the local models can be determined using the selected stochastic optimization algorithm (e.g. rjMCMC).

For computing segmentations the Reversible Jump Markov Chain Monte Carlo method may comprise the steps of:

- splitting/merging adjacent segment(s),
- changing position of a change point,
- adding/removing a local model to/from a segment, and
- changing one local model in one segment.

The results of the segmentation for all time-series can be used as observations (i.e. input) for the learning of the Timed Transition Petri Net model.

A Timed Transition Petri Net model may be constructed, which captures the structure of all segmentations simultaneously by associating the local models to Petri Net places.

A single Timed Transition Petri Net model instance can be used, wherein sampling may be performed according to its execution semantic.

In addition to the internal execution semantics, place markings can be externally modified to influence the execution, for example by adding tokens to a specific place.

The local models can be associated with the Petri Net Places so that at least one execution of the Timed Transition Petri Net model generates a segmentation and wherein learning is performed using the first Reversible Jump Markov Chain Monte Carlo method.

For computing the TTPN model the Reversible Jump Markov Chain Monte Carlo method may comprise the steps of:

- adding/removing a place,
- adding/removing a transition,
- adding/removing an edge,
- changing a local model associated to a place,
- changing a duration of a timed transition,
- adding/removing a "tail" structure, and
- expanding an edge into edge-transition-edge-place-edge structure or collapse such a structure to an edge.

The particle filter can be initialized and used such that particles correspond to previously learned process models together with an execution state of a Timed Transition Petri net.

A prediction step may be executed by sampling each particle according to an execution semantic of the Timed Transition Petri Net model.

Likelihoods can be computed as reconstruction errors with respect to the respective observation.

The model represented by particles amounting to the greatest likelihood mass may be considered as the recognition result.

Local models may be used to generate actions and compute likelihoods.

The agent can be a software agent or a robot or another embodiment like a car.

At least one of prior distributions, a likelihood computation and MCMC moves may be employed for the Reversible Jump Markov Chain Monte Carlo method.

The method laid out above may be implemented in a robot system to control behavior of the robot system, a driver assistance system and/or can be provided as a computer program product incorporating the method on a physical medium.

**Brief Description of the Figures**

Fig. 1    shows generalization relations and requirements for stochastic optimization methods as required for this invention.

Fig. 2    illustrates an example of a TTPN representation of a process. The net consists of places p1, ..., p5 and transitions t1, ... , t4 and edges between these. Labels below places and transitions indicate the associated local models of places (for example object b moving towards object d while place p1 is marked) and transition delay of transitions respectively. The places p1 and p2 describe a process which consists of two concurrent sub-processes which end simultaneously when t1 fires. The sub-nets p3-t3 (dashed) and p3-t2-p5-t4 (solid) describe mutually exclusive sub-processes.

Fig. 3    Likelihood computation in stage 2.

Fig. 4    shows an activity diagram of the rjMCMC method for learning TTPN models.

Fig. 5    pictures an activity diagram of the recognition mode.

Fig. 6    shows an activity diagram of the generation mode.

**Detailed description of the embodiments**

Aspects addressing the disadvantages of methods mentioned in the State of the Art section or providing alternatives therefore are some or all of the following:

Petri Nets: While Petri Nets are widely applied as an explicit representation or specification of processes, the invention applies Petri Nets for automatic construction of representations based on observations of the relevant processes.

Process Models: Models like HMMs and ANNs have been used to automatically construct representations of processes. Petri Nets as a process model provide the following advantageous properties:

Interpretability: The behavior described by a Petri Net model is usually directly reflected by its structure which can be easily visualized and, in many cases, interpreted.

Expressive Power: Petri Net models can naturally express typical properties of complex processes like absence or presence of ordering constraints, concurrency, causal relations, repetitions and alternative causes of actions. This is in contrast to HMM or ANN models, where these properties can only be captured at higher levels of complexity which usually impedes interpretation as well as automatic construction of such models.

Sampling Method: The invention applies the rjMCMC method to segment time series observations and to learn TTPN structures. This advantageous combination requires a conception and specification of domain-specific Markov Chain Moves.

Prior Distributions: In a second learning stage, prior distributions on a space of TTPNs may be used to facilitate residence of a Markov Chain in areas inhabited by useful models.

Likelihood Computation: In the second learning stage, a novel algorithm can be used to perform an approximate, fast likelihood computation.

A method of a preferred embodiment comprises the following steps:

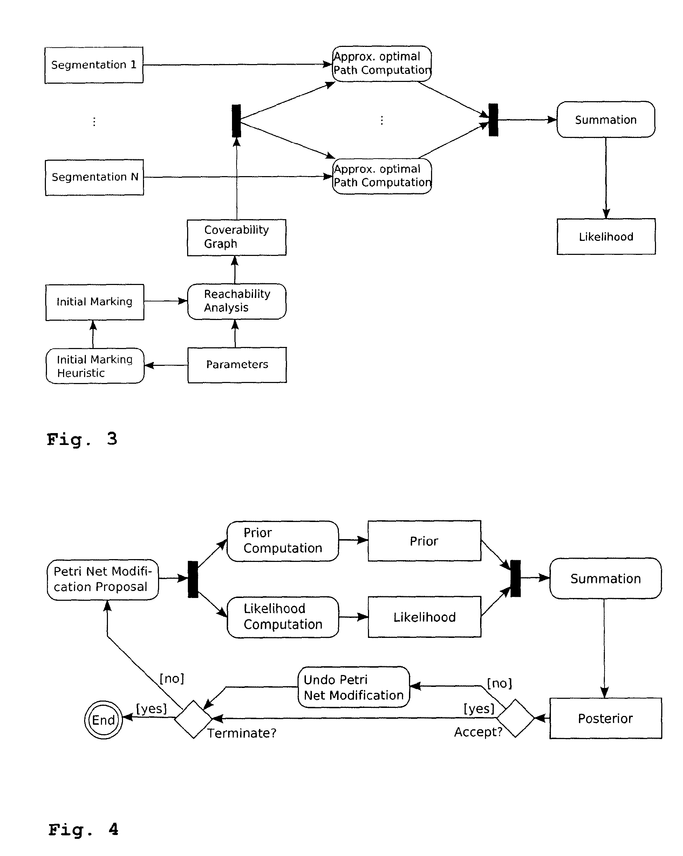

1. For multiple time-series observations, compute individual segmentations, selecting a set of dynamical system-based local models for each segment using an rjMCMC algorithm. These segmentations describe each time-series as a linear sequence of segments, but do not capture the structure of the process which simultaneously underlies all observations.
2. Treating all segmentations resulting from step 1. and their local models as input, using another rjMCMC algorithm, compute a TTPN model. This step uses prior distributions, likelihood computation and MCMC moves specialized for the TTPN model (See Fig. 4).

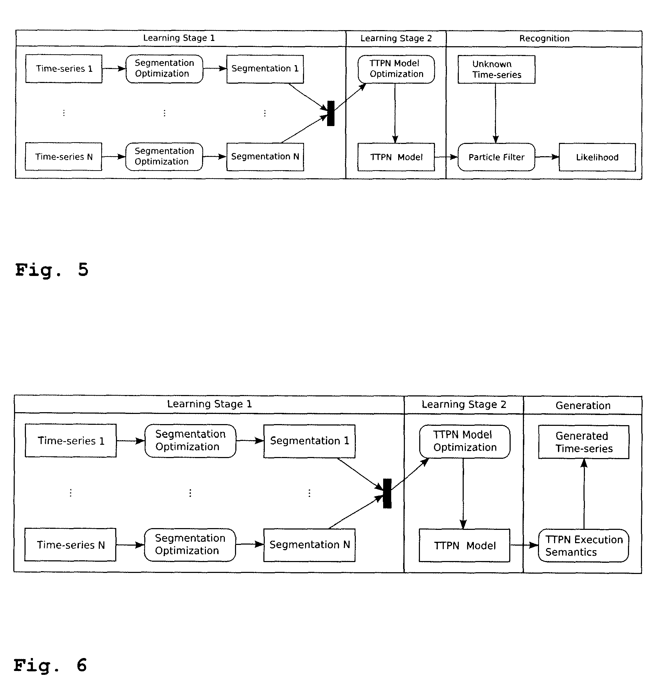

3. a) Recognition: For unseen observation time-series, instantiate TTPN models for all known processes and use a particle filter to continuously determine the model which gives the best explanation of the observations (See Fig. 5).

3. b) Generation: Instantiate TTPN model of the desired process. Simulate model using TTPN execution semantics. Use local models as executable controllers (See Fig. 6).

Steps 1 and 2 can be characterized as learning stage, while 3 a) and 3 b) are two possible operation stages.

Segmenting Time-series (Step 1)

In a preprocessing step, individual observation time-series are segmented into segments each of which can be described by zero, one or more local models. The number of segments, the number of local models required to describe individual segments and the parameters of these local models are determined using an rjMCMC method. The prior distribution over segments is identical to the one presented in [Green, 1995]. The moves used in this rjMCMC method are some or all of the following:

- splitting/merging adjacent segment(s),
- changing position of one change point,
- adding/removing a local model to/from segment, and
- Change one local model in one segment.

This step is similar to the changepoint analysis approaches in [Green, 1995] and [Punskaya et al., 2002], but

- different local models are used (dynamical system-based local models). The likelihood is computed as mean squared reconstruction error with respect to the observed time-series

- sets of local models are associated to segments

Computing a TTPN Model (Step 2)

In the second step, the results for all time-series produced in the first step are used as observations (i.e. inputs) of a TTPN model. The goal of this step is to construct a TTPN model which captures the structure of all segmentations simultaneously by associating local models (from the same set as before) to Petri Net places such that at least one execution of the TTPN model generates each segmentation. The learning is again performed using rjMCMC. The log-likelihood (LL) function is based on the Jaccard distance between the sets of local models generated by the optimal TTPN marking sequences and the sets of local models of the segmentations:

$$score_y(p) = \sum_{s \in p, s' \in y} |s \cap s'| \, jaccard(s, s')$$

$$LL = \sum_{y \, segmentation} \arg\max_p score_y(p)$$

where the cardinality of the intersection of s and s' is the length of their overlap and each p is a path in the Coverability Graph of the TTPN model in question, jaccard is the Jaccard Distance and y is one segmentation.

The algorithm that computes an approximation of this likelihood function by enumerating paths through the Coverability Graph is depicted in Fig. 3.

The following prior distributions on the space of TTPN models are used to select useful TTPN models:

- Complexity:

$$\log P_{comp}(\vec{\Theta}) = |P_{\Theta}| + |T_{\Theta}| + |E_{\Theta}|$$

where P, T, E are the sets of places, transitions and edges respectively.
- Boundedness:

$$\log P_{bound}(\vec{\Theta}) = \frac{1}{|P|} \sum_{p \in P_{\Theta}} \log Poisson(\max_{m \in G} m(p); \lambda)$$

where G is the Coverability Graph.
- Liveliness:

$$\log P_{live}(\vec{\Theta}) = \frac{1}{|T_{\Theta}|} \sum_{t \in T_{\Theta}} liveliness\ (t).$$

- Consistency:

$$\log P_{cons}(\vec{\Theta}) = \sum_{m \in G} number\ of\ conflictin\ g\ places\ marked\ \in m$$

The rjMCMC method uses the following moves in the space of TTPN models:

- Add/remove place
- Add/remove transition
- Add/remove edge
- Change local model associated to place
- Change duration of timed transition
- Add/remove "tail" structure
- Expand edge into edge-transition-edge-place-edge structure/collapse to edge

Recognition (Step 3 a)

A Particle Filter is initialized such that particles correspond to previously learned process models together with an execution state. The prediction step is executed by sampling according to the execution semantic of each particle's TTPN. Likelihoods are computed as reconstruction errors with respect to the actual observation. The model whose representing particles amount for the greatest likelihood mass is considered the recognition result.

Generation (Step 3 b)

Using a single TTPN process model instance, sampling is done according to the execution semantic. Place markings can be modified to directly influence the execution. Apart from that, local models can be used to generate actions and compute likelihoods.

**Prior Art References**

[Bause and Kritzinger, 2002] Bause, F., & Kritzinger, P. (2002). Stochastic Petri nets. An introduction to the theory. Wiesbaden: Vieweg.

[Bui et al., 2001] Bui, H., Venkatesh, S., and West, G. (2001). Tracking and Surveillance in Wide-Area Spatial Environments Using the Abstract Hidden Markov Model. International Journal of Pattern Recognition and Artificial Intelligence, 15 (1) :177-196.

[Bui et al., 2002] Bui, H., Venkatesh, S., and West, G. (2002). Policy recognition in the Abstract Hidden Markov Model. Journal of Artificial Intelligence Research, 17(45):1-499.

[Fearnhead, 2006] Fearnhead, P. (2006). Exact and efficient Bayesian inference for multiple changepoint problems. Statistics and computing, 16(2):203-213.

[Green, 1995] Green, P. J. (1995). Reversible jump Markov chain Monte Carlo computation and Bayesian model de termination. Biometrika, 82, 711-732.

[Grupen and Huber, 2005] Grupen, R. A. and Huber, M. (2005). A framework for the development of robot behavior.

[Hoey et al., 2005] Hoey, J., Poupart, P., Boutilier, C., and Mihailidi, A. (2005). POMDP models for assistive technology. Technical report, IATSL.

[Intille and Bobick, 1999] Intille, S. and Bobick, A. (1999). A framework for recognizing multi-agent action from visual evidence. In Proceedings of the National Conference on Artificial Intelligence, pages 518-525. JOHN WILEY & SONS LTD.

[Punskaya et al., 2002] Punskaya, E., Andrieu, C., Doucet, A., and Fitzgerald, W. (2002). Bayesian curve fitting using MCMC with applications to signal segmentation. IEEE Transactions on Signal Processing, 50(3):747-758.

[Schrempf and Hanebeck, 2005] Schrempf, O. and Hanebeck, U. (2005). A Generic Model for Estimating User-Intentions in Human-Robot Cooperation. In Proceedings of the 2nd International Conference on Informatics in Control, Automation and Robotics, ICINCO, volume 5.

[Verma and Rao, 2006] Verma, D. and Rao, R. (2006). Goal-based imitation as probabilistic inference over graphical models. Advances in Neural Information Processing Systems, 18:1393.

[Xuan and Murphy, 2007] Xuan, X. and Murphy, K. (2007). Modeling changing dependency structure in multivariate time series. In Proceedings of the 24th international conference on Machine learning, page 1062. ACM.

[Yamashita and Tani, 2008] Yamashita, Y. and Tani, J. (2008). Emergence of functional hierarchy in a multiple timescale neural network model: a humanoid robot experiment. PLoS Computational Biology, 4(11).

http://en.wikipedia.org/wiki/Hidden_Markov_model

http://en.wikipedia.org/wiki/Jaccard_distance

http://en.wikipedia.org/wiki/POMDP

http://en.wikipedia.org/wiki/Markov chain Monte Carlo

http://en.wikipedia.org/wiki/Reversible Jump

http://en.wikipedia.org/wiki/Stochastic optimization

http://en.wikipedia.org/wiki/Time_series

http://en.wikipedia.org/wiki/Dynamical system

http://en.wikipedia.org/wiki/Scalar potential

http://en.wikipedia.org/wiki/Particle_filter

**Claims**

1.  A method for controlling an artificial agent, such as e.g. a robot having at least one actuator such as e.g. a manipulator arm, on-board sensors and a computing unit, based on a process underlying observed multiple time-series observations,
    the method comprising the steps of:

    - obtaining multiple sensory observations, each of which is a time-series, observed from the environment by sensorial input means,
    - computing a segmentation for each observed time-series, by selecting a set of local models for each segment,
    - computing a Timed Transition Petri Net (TTPN) model in order to generate an approximation of all segmentations simultaneously by using an algorithm selected from the class of stochastic optimization methods, and
    - controlling at least one artificial actuator using the TTPN model in order to repeat or assist the process.

2.  The method of claim 1, wherein for repeating or assisting the process, a previously computed TTPN model is instantiated and the execution semantics are applied to generate a series of actions for execution by said agent.

3.  An automated method for recognizing a process underlying multiple time-series observations observed using sensorial input means,
    the method comprising the steps of:

    - obtaining multiple sensory observations, each of which is a time-series, observed from the environment by sensorial input means,
    - computing a segmentation for each observed time-series, by selecting a set of local models for each segment,
    - computing a Timed Transition Petri Net (TTPN) model in order to generate an approximation of all segmentations simultaneously by using an algorithm selected from the class of stochastic optimization methods,
    - in order to recognize, instantiating multiple previously learned TTPN models and using a particle filter to continuously determine the model which provides the best explanation of the observed time-series.

4.  The method according to claim 3,
    wherein the particle filter is initialized and used such that particles correspond to previously learned process models together with an execution state of a Timed Transition Petri net.

5.  The method according to any of the preceding claims,
    wherein the stochastic optimization method used to derive the TTPN from the segmentations and selected local models is a Evolutionary Algorithm or a Reversible Jump Markov Chain Monte Carlo method.

6.  The method according to any of the preceding claims, wherein the segmentation describes a time-series as a linear sequence of segments.

7.  The method according to any of the preceding claims, wherein the local model is a dynamical system-based model.

8.  The method according to any of the preceding claims, wherein the number of segments, the number of local models describing individual segments and/or the parameters of the local models is determined using the selected stochastic optimization algorithm such as e.g. rjMCMC.

9.  The method according to any of the preceding claims, wherein for computing segmentations the Reversible Jump Markov Chain Monte Carlo method may comprise the steps of:

    - splitting/merging adjacent segment(s),
    - changing position of a change point,
    - adding/removing a local model to/from a segment, and
    - changing one local model in one segment.

10. The method according to any of the preceding claims, wherein the local models are associated with the Petri Net Places so that at least one execution of the Timed Transition Petri Net model generates a segmentation and wherein learning is performed using the first Reversible Jump Markov Chain Monte Carlo method.

**11.** The method according to any of the preceding claims, wherein for computing the TTPN model a Reversible Jump Markov Chain Monte Carlo method comprises the steps of:

- adding/removing a place,
- adding/removing a transition,
- adding/removing an edge,
- changing a local model associated to a place,
- changing a duration of a timed transition,
- adding/removing a "tail" structure, and
- expanding an edge into edge-transition-edge-place-edge structure or collapse such a structure to an edge.

**12.** A computing unit or a computer software program designed for performing a method according to any of the preceding claims.

**13.** A robot or land, sea or air vehicle having:

- at least one sensor functionally connected to a computing unit, and
- at least one actuator controlled by the computing unit, wherein the computing unit is designed to perform a method according to any of claims 1 to 11.

Fig. 1

Fig. 2

Fig. 3

Fig. 4

**Fig. 5**

**Fig. 6**

Europäisches
Patentamt

European
Patent Office

Office européen
des brevets

# EUROPEAN SEARCH REPORT

**Application Number**

EP 10 15 5045

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | ZOLLNER R ET AL: "Programming by demonstration: dual-arm manipulation tasks for humanoid robots" INTELLIGENT ROBOTS AND SYSTEMS, 2004. (IROS 2004). PROCEEDINGS. 2004 IEEE/RSJ INTERNATIONAL CONFERENCE ON SENDAI, JAPAN 28 SEPT.-2 OCT., 2004, PISCATAWAY, NJ, USA,IEEE, PISCATAWAY, NJ, USA LNKD-DOI:10.1109/IROS.2004.1389398, vol. 1, 28 September 2004 (2004-09-28), pages 479-484, XP010765528 ISBN: 978-0-7803-8463-7 | 1,12,13 | INV. B25J9/16 |
| Y | * page 479 - page 484 * | 2-11 | |
| Y | ZHAO H B ET AL: "A comparison of nonlinear filtering approaches for Radar target-tracking performances" INFORMATION AND AUTOMATION, 2009. ICIA '09. INTERNATIONAL CONFERENCE ON, IEEE, PISCATAWAY, NJ, USA, 22 June 2009 (2009-06-22), pages 12-17, XP031512634 ISBN: 978-1-4244-3607-1 * page 12 - page 17 * | 2-11 | |
| | | | **TECHNICAL FIELDS SEARCHED (IPC)** |
| | | | B25J |
| A | GAL LAVEE ET AL: "Video Event Modeling and Recognition in Generalized Stochastic Petri Nets" IEEE TRANSACTIONS ON CIRCUITS AND SYSTEMS FOR VIDEO TECHNOLOGY, IEEE SERVICE CENTER, PISCATAWAY, NJ, US, vol. 20, no. 1, 1 January 2010 (2010-01-01), pages 102-118, XP011282756 ISSN: 1051-8215 * page 102 - page 118 * | 1-13 | |

-/--

The present search report has been drawn up for all claims

| Place of search | Date of completion of the search | Examiner |
|---|---|---|
| The Hague | 3 May 2010 | Hauser, Leon |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

EP 2 363 251 A1

Europäisches Patentamt
European Patent Office
Office européen des brevets

# EUROPEAN SEARCH REPORT

Application Number

EP 10 15 5045

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | WILSON A D ET AL: "Realtime online adaptive gesture recognition" RECOGNITION, ANALYSIS, AND TRACKING OF FACES AND GESTURES IN REAL-TIME SYSTEMS, 1999. PROCEEDINGS. INTERNATIONAL WORKSHOP ON CORFU, GREECE 26-27 SEPT. 1999, LOS ALAMITOS, CA, USA,IEEE COMPUT. SOC, US LNKD- DOI:10.1109/RATFG.1999.799232, 26 September 1999 (1999-09-26), pages 111-116, XP010356539 ISBN: 978-0-7695-0378-3 * page 111 - page 116 * ----- | 1-13 | |

TECHNICAL FIELDS
SEARCHED      (IPC)

The present search report has been drawn up for all claims

| Place of search | Date of completion of the search | Examiner |
|---|---|---|
| The Hague | 3 May 2010 | Hauser, Leon |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **BAUSE, F. ; KRITZINGER, P.** *Stochastic Petri nets. An introduction to the theory,* 2002
- **BUI, H. ; VENKATESH, S. ; WEST, G.** Tracking and Surveillance in Wide-Area Spatial Environments Using the Abstract Hidden Markov Model. *International Journal of Pattern Recognition and Artificial Intelligence,* 2001, vol. 15 (1), 177-196
- **BUI, H. ; VENKATESH, S. ; WEST, G.** Policy recognition in the Abstract Hidden Markov Model. *Journal of Artificial Intelligence Research,* 2002, vol. 17 (45), 1-499
- **FEARNHEAD, P.** Exact and efficient Bayesian inference for multiple changepoint problems. *Statistics and computing,* 2006, vol. 16 (2), 203-213
- **GREEN, P. J.** Reversible jump Markov chain Monte Carlo computation and Bayesian model de termination. *Biometrika,* 1995, vol. 82, 711-732
- **GRUPEN, R. A. ; HUBER, M.** *A framework for the development of robot behavior,* 2005
- **HOEY, J. ; POUPART, P. ; BOUTILIER, C. ; MIHAILIDI, A.** POMDP models for assistive technology. *Technical report, IATSL,* 2005
- A framework for recognizing multi-agent action from visual evidence. **INTILLE, S. ; BOBICK, A.** Proceedings of the National Conference on Artificial Intelligence. JOHN WILEY & SONS LTD, 1999, 518-525

- **PUNSKAYA, E. ; ANDRIEU, C. ; DOUCET, A. ; FITZGERALD, W.** Bayesian curve fitting using MCMC with applications to signal segmentation. *IEEE Transactions on Signal Processing,* 2002, vol. 50 (3), 747-758
- **SCHREMPF, O. ; HANEBECK, U.** A Generic Model for Estimating User-Intentions in Human-Robot Cooperation. *Proceedings of the 2nd International Conference on Informatics in Control, Automation and Robotics, ICINCO,* 2005, vol. 5
- **VERMA, D. ; RAO, R.** Goal-based imitation as probabilistic inference over graphical models. *Advances in Neural Information Processing Systems,* 2006, vol. 18, 1393
- Modeling changing dependency structure in multivariate time series. **XUAN, X. ; MURPHY, K.** Proceedings of the 24th international conference on Machine learning. ACM, 2007, 1062
- **YAMASHITA, Y. ; TANI, J.** Emergence of functional hierarchy in a multiple timescale neural network model: a humanoid robot experiment. *PLoS Computational Biology,* 2008, vol. 4 (11